# EUROPÄISCHE PATENTANMELDUNG

(11) **EP 1 244 283 A1**
(43) Veröffentlichungstag der Anmeldung: **25.09.2002**
(21) Anmeldenummer: 01440084.0
(22) Anmeldetag: 23.03.2001
(51) Int. Cl.: H04M 3/487

(54) **Verfahren zum betreiben eines funkbasierten Kommunikationssystems**

(71) Anmelder: ALCATEL, 75008 Paris (FR)
(72) Erfinder: Jeschke, Michael, Dipl.-Ing., 70197 Stuttgart (DE)
(74) Vertreter: Dreiss, Fuhlendorf, Steimle & Becker

(57) **Zusammenfassung**

Es wird ein Verfahren zum Betreiben eines funkbasierten Kommunikationssystems beschrieben. Eine Werbeinformation wird von einer Basisstation (BS) an mindestens eine Mobilstation (MS) gesendet. Die Mobilstation (MS) prüft, ob von einem Benutzer der Mobilstation (MS) eine Aktion durchgeführt wird, bei der ein Anzeigefeld (AF) der Mobilstation (MS) von dem Benutzer betrachtet wird. Sofern dies der Fall ist, wird die empfangene Werbeinformation auf dem Anzeigefeld (AF) der Mobilstation (MS) angezeigt. Die Mobilstation (MS) sendet eine Bestätigung betreffend die Anzeige der Werbeinformation an die Basisstation (BS) zurück.

## Beschreibung

Die Erfindung geht aus von einem Verfahren zum Betreiben eines funkbasierten Kommunikationssystems entsprechend dem Oberbegriff des Anspruchs 1. Weiterhin betrifft die Erfindung ein entsprechendes funkbasiertes Kommunikationssystem und eine entsprechende Mobilstation hierfür.

Ein derartiges Verfahren ist beispielsweise von einem sogenannten GSM-Kommunikationssystem (GSM = global system for mobile communication) bekannt. Dort können Daten zwischen einer Basisstation und einer Mehrzahl von Mobilstationen über Funk ausgetauscht werden.

Weiterhin ist aus der US 6.088.343 (Spalte 10, Zeilen 52 bis 57) bekannt, bei einem GSM-Kommunikationssystem Werbeinformationen über einen sogenannten Broadcast-Kanal an eine Mehrzahl von Mobilstationen innerhalb einer Zelle des Kommunikationssystems zu versenden.

Nähere Einzelheiten bezüglich der Versendung, Anzeige und gegebenenfalls Vergütung dieser Werbeinformationen ist jedoch nicht bekannt.

Aufgabe der Erfindung ist es, ein Verfahren der eingangs genannten Art zu schaffen, bei dem nicht nur Werbeinformationen auf einer Mobilstation zur Anzeige gebracht werden können, sondern bei dem angezeigte Werbeinformationen in irgend einer Weise auch vergütet werden können.

Diese Aufgabe wird durch das Verfahren nach dem Anspruch 1 gelöst. Ebenfalls wird die Aufgabe durch die Mobilstation nach dem Anspruch 12 und durch das Kommunikationssystem nach dem Anspruch 15 gelöst.

Erfindungsgemäß wird die Werbeinformation genau dann angezeigt, wenn der Benutzer überhaupt in der Lage ist, die Werbeinformation auf der Mobilstation zur Kenntnis zu nehmen. Ist dies der Fall, dann wird zum Zwecke der Vergütungsermittlung eine Bestätigung betreffend die Kenntnisnahme der Werbeinformation von der Mobilstation zurückgesendet. Die Basisstation bzw. eine sonstige Institution, z.B. ein entsprechender Server oder dergleichen, können dann aus den erhaltenen Bestätigungen auf die Zeitdauer schließen, die die Werbeinformation auf der Mobilstation angezeigt worden ist und die demnach zu vergüten bzw. zu verrechnen ist. Damit wird der wesentliche Vorteil erreicht, dass nur diejenige Zeitdauer bei der Vergütungsermittlung berücksichtigt wird, in der es dem Benutzer überhaupt möglich war, die Werbeinformation zur Kenntnis zu nehmen. Dies ermöglicht insgesamt eine sinnvolle Versendung, Anzeige und Vergütung bzw. Verrechnung von Werbeinformationen innerhalb des Kommunikationssystems.

Bei einer vorteilhaften Weiterbildung der Erfindung wird die Werbeinformation gleichzeitig an eine Mehrzahl von Mobilstationen gesendet. Insbesondere wird die Werbeinformation an alle Mobilstationen versendet, die sich in dem örtlichen Bereich befinden, den die zugehörige Basisstation abdeckt. Dies bringt den wesentlichen Vorteil mit sich, dass die Werbeinformation über einen Kanal an die Mobilstationen gesendet werden kann, der allen Mobilstationen zugeordnet ist. Dabei kann es sich insbesondere um einen sogenannten Broadcast-Kanal handeln.

Im Unterschied dazu wird bei einer weiteren vorteilhaften Ausgestaltung der Erfindung die Bestätigung betreffend die Anzeige der Werbeinformation über einen Kanal an die Basisstation gesendet, der nur einer der Mobilstationen zugeordnet ist. Damit wird gewährleistet, dass für jede einzelne Mobilstation über die zurückgesendeten Bestätigungen exakt diejenige Zeitdauer ermittelt werden kann, während der die Werbeinformation auf dieser Mobilstation angezeigt worden ist. Damit ist es möglich, jede Mobilstation einzeln zu vergüten.

Bei einer besonders vorteilhaften Weiterbildung der Erfindung erzeugt die Mobilstation in Abhängigkeit von der angezeigten Werbeinformation einen Hash-Code und versendet denselben als Bestätigung an die Basisstation. Der Hash-Code hat den Vorteil, dass er einerseits ohne großen Aufwand erstellt werden kann, dass er aber andererseits trotzdem äußerst fälschungssicher ist. Weiterhin hat die Verwendung des Hash-Codes den Vorteil, dass den einzelnen Werbeinformationen keine Nummern oder dergleichen zugeordnet werden müssen, die dann zusätzlich mit den Werbeinformationen an die Mobilstationen versendet werden müssen.

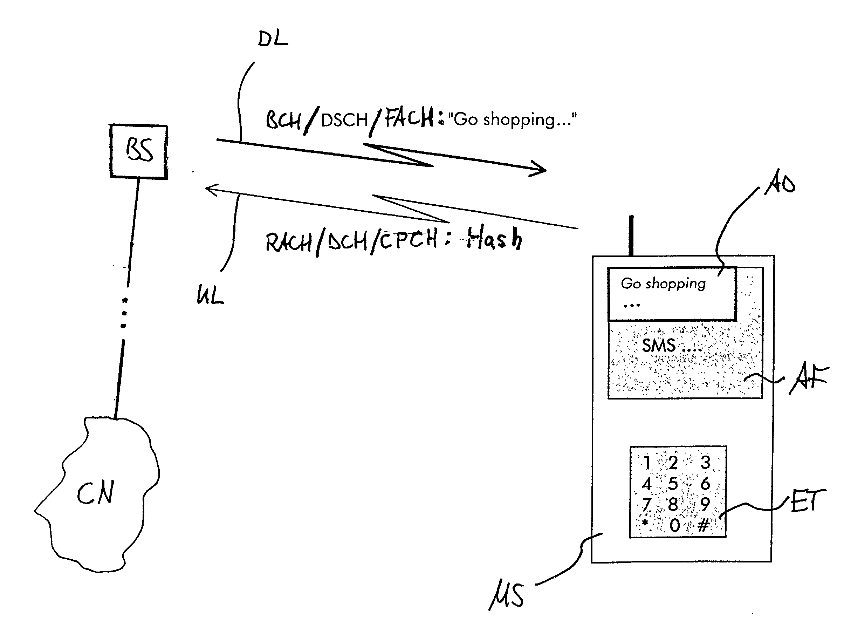

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels eines erfindungsgemäßen Verfahrens zum Betreiben eines funkbasierten Kommunikationssystems.

In der Figur ist ein Netzwerk CN (CN = core network) dargestellt, bei dem es sich beispielsweise um ein UMTS-Netzwerk (UMTS = universal mobile telecommunication system) handeln kann. Das Netzwerk CN ist mit einer Basisstation BS gekoppelt, die einen bestimmten örtlichen Bereich abdeckt, der eine Mehrzahl sogenannter Zellen aufweisen kann. Weiterhin ist in der Figur eine Mobilstation (MS = mobile station) dargestellt, die sich in diesem örtlichen Bereich befindet. Die Mobilstation MS weist eine Eingabetastatur ET für bestimmte Zeichen sowie ein Anzeigefeld AF z.B. für die Anzeige von sogenannten SMS-Nachrichten (SMS = short message service) auf.

Die Basisstation BS und die Mobilstation MS können über Funk Daten in beiden Richtungen miteinander austauschen. Dies ist durch die beiden Pfeile DL (DL = downlink) und UL (UL = uplink) in der Figur angedeutet.

Für die Übertragung von Daten von der Basisstation BS an die Mobilstation MS, also im Downlink DL, ist es möglich, die Daten über einen sogenannten Broadcast-Kanal BCH (BCH = broadcast channel) gleichzeitig an alle Mobilstationen MS zu übertragen, die sich in diesem Moment in einer dem Broadcast-Kanal BCH zugeordneten Zelle befinden. Eine ähnliche Übertragung von Daten an alle im Bereich der Basisstation BS vorhandenen Mobilstationen MS ist auch über einen sogenannten gemeinsamen Kanal DSCH (DSCH = downlink shared channel) oder über einen sogenannten Vorwärts-Kanal FACH (FACH = forward access channel) möglich.

Über einen oder mehrere dieser Kanäle, also über den BCH und/oder den DSCH und/oder den FACH, wird eine Werbeinformation von der Basisstation BS an alle Mobilstationen MS in dem zugehörigen örtlichen Bereich übertragen. Die Werbeinformation kann in optischer und/oder in akustischer Form vorliegen. Die Werbeinformation ist dabei derart ausgestaltet, dass sie auf dem Anzeigefeld AF oder über einen Lautsprecher beispielsweise einer Freisprecheinrichtung der Mobilstation MS angezeigt bzw. abgespielt werden kann. Die Werbeinformation wird in allen Mobilstationen MS entweder sofort verarbeitet oder vorübergehend gespeichert, um danach verarbeitet zu werden. In der Figur ist beispielhaft bei dem Pfeil für den Downlink DL als optische Werbeinformation der Text "Go shopping ..." angegeben. Diese optische Werbeinformation wird nachfolgend zur näheren Erläuterung des vorliegenden Ausführungsbeispiels herangezogen. Es versteht sich, dass eine akustische Werbeinformation in entsprechender Weise herangezogen werden könnte.

Nachfolgend wird die Verarbeitung der vorgenannten Werbeinformation anhand der in der Figur dargestellten Mobilstation MS erläutert. Es versteht sich, dass diese Art der Verarbeitung auch von weiteren oder allen Mobilstationen MS innerhalb des örtlichen Bereichs der Basisstation BS gegebenenfalls durchgeführt werden kann.

Die Mobilstation MS prüft andauernd oder zumindest in aufeinanderfolgenden Zeitpunkten, ob der Benutzer der Mobilstation MS eine Aktion ausführt, bei der es erforderlich ist, dass er in diesem Moment das Anzeigefeld AF der Mobilstation MS betrachtet. Bei einer derartigen Aktion kann es sich beispielsweise um das Schreiben einer SMS-Nachricht mittels der Eingabetastatur ET handeln, oder um das Surfen im Internet, oder um das Abrufen von Daten aus dem Internet oder dergleichen. Bei einer derartigen Aktion kann es sich auch darum handeln, dass der Benutzer ein Computerspiel auf der Mobilstation MS spielt oder Einträge in einem Telefonbuch oder Adressbuch oder dergleichen vornimmt.

Wird von der Mobilstation MS eine derartige Aktion des Benutzers erkannt, so bringt die Mobilstation MS die letzte empfangene und gegebenenfalls zwischengespeicherte Werbeinformation nunmehr auf dem Anzeigefeld AF der Mobilstation MS zur Anzeige. Dies kann beispielsweise dadurch erfolgen, dass in einem vorbestimmten Bereich AD des Anzeigefelds AF die Werbeinformation angezeigt wird, und zwar so, dass die an sich von dem Benutzer der Mobilstation MS durchgeführte Aktion, also z.B. das Schreiben einer SMS-Nachricht nicht von der Werbeinformation überlagert und damit gestört wird.

Die Werbeinformation wird danach so lange auf dem Anzeigefeld AF der Mobilstation MS zur Anzeige gebracht, bis die Mobilstation MS erkennt, dass der Benutzer keine Aktion mehr durchführt, bei der er das Anzeigefeld AF betrachtet.

Während des Zeitraums, in dem die Werbeinformation auf dem Anzeigefeld AF der Mobilstation MS angezeigt wird, sendet die Mobilstation MS fortlaufend Bestätigungen über den Uplink UL an die Basisstation BS, aus denen jeweils hervorgeht, dass die Werbeinformation auf dem Anzeigefeld AF der Mobilstation MS angezeigt wird. Alternativ ist es möglich, dass die Bestätigung nur ein Mal am Ende der Anzeige der Werbeinformation an die Basisstation BS gesendet wird. In diesem Fall kann die Zeitdauer, in der die Werbeinformation angezeigt worden ist, daraus ermittelt werden, dass eine bestimmte Anzeigedauer pro Einblendung der Werbeinformation vorab fest vorgegeben wird.

Diese Bestätigungen können von einem Server in dem Netzwerk CN oder einer sonstigen, dort vorhandenen Institution dazu verwendet werden, die Anzeige der Werbeinformation z.B. an den Benutzer der Mobilstation MS zeitabhängig oder pro Einblendung zu vergüten bzw. in sonstiger Weise zu verrechnen.

Die vorgenannten Bestätigungen können beispielsweise über einen sogenannten RACH (RACH = random access channel) und/oder einen sogenannten DCH (DCH = dedicated channel) und/oder einen sogenannten CPCH (CPCH = common packet channel) im Uplink UL erfolgen und damit von der Mobilstation MS an die Basisstation BS übertragen werden. Die Auswahl des jeweiligen Kanals hängt dabei davon ab, in welchem Zustand sich die Mobilstation MS im jeweiligen Moment befindet, z.B. ob sich die Mobilstation MS in einem Leerlaufbetrieb befindet oder nicht.

Als Bestätigung betreffend die Anzeige der Werbeinformation auf der Mobilstation MS kann beispielsweise eine Nummer verwendet werden, die jeder Werbeinformation zugeordnet wird, und die der Mobilstation MS zusammen mit der Werbeinformation von der Basisstation BS zugesandt wird. Sobald die Werbeinformation auf dem Anzeigefeld AF der Mobilstation MS angezeigt wird, sendet die Mobilstation MS dann diese Nummer wieder als Bestätigung für die Anzeige der Werbeinformation zurück. Dies wird fortlaufend oder für jede Einblendung wiederholt, solange die Werbeinformation auf der Mobilstation angezeigt wird. Das Netzwerk CN kann dann anhand der Anzahl der aufeinanderfolgend zurückgesandten Nummern erkennen, wie lange die Werbeinformation oder wieviele Einblendungen auf der Mobilstation zur Anzeige gebracht worden ist.

Ebenfalls ist es möglich, als Bestätigung einen sogenannten Hash-Code zu verwenden. Dieser Hash-Code wird mit Hilfe eines vorgegebenen Algorithmus aus der Werbeinformation selbst generiert. Ein derartiger Algorithmus ist z.B. in IETF RFC 1321 (Internet Engineering Task Force, Request for Comments) beschrieben. Der Hash-Code kann somit unabhängig voneinander von dem Neztwerk CN und der Mobilstation MS erzeugt werden und muss damit nicht zusammen mit der Werbeinformation übertragen werden. Sobald eine Werbeinformation auf der Mobilstation MS zur Anzeige gebracht wird, bestätigt dies die Mobilstation MS durch die Rücksendung des zugehörigen Hash-Codes. Das Netzwerk CN erzeugt unabhängig von der Mobilstation MS auf der Grundlage der ausgesendeten Werbeinformation den entsprechenden Hash-Code und vergleicht diesen mit dem von der Mobilstation MS empfangenen Hash-Code. Aus einer Übereinstimmung schließt das Netzwerk CN auf die Anzeige der Werbeinformation auf der Mobilstation MS und berücksichtigt dies in Form einer Vergütung oder dergleichen. Die Anzahl der bei dem Netzwerk CN zurückerhaltenen Hash-Codes ist dabei wiederum repräsentativ für die Zeitdauer, die die Werbeinformation auf der Mobilstation angezeigt worden ist. Sofern pro Einblendung einer Werbeinformation nur eine Bestätigung versendet wird, so kann der Hash-Code in diesem Fall noch zusätzlich die Zeitdauer der Einblendung enthalten.

Die Werbeinformation kann in vorgegebenen Zeitabständen erneut versendet werden. Durch die Zwischenspeicherung der Werbeinformation in der Mobilstation MS kann dieselbe auch in den dazwischen liegenden Zeitbereichen zur Anzeige gebracht werden. Weiterhin kann die Werbeinformation in anderen vorgegebenen Zeitabständen verändert bzw. gewechselt werden. Ebenfalls ist es aufgrund der Aussendung der Werbeinformation an alle Mobilstationen MS eines bestimmten örtlichen Bereichs einer Basisstation BS möglich, die Werbeinformation ortsspezifisch auszugestalten.

Mit Hilfe der an das Netzwerk CN zurückgesendeten Bestätigungen kann das Netzwerk CN erkennen, wie lange oder wie oft eine Werbeinformation auf einer bestimmten Mobilstation MS zur Anzeige gebracht worden ist. In Abhängigkeit von dieser Zeitdauer oder Anzahl kann dann das Netzwerk CN dem Benutzer der Mobilstation MS eine geldwerte Vergütung beispielsweise in Form einer Verminderung der Telefongebühren zukommen lassen. Alternativ oder zusätzlich ist es möglich, dass das Netzwerk CN in Abhängigkeit von diesen Anzeige-Zeitdauern oder -Anzahlen dem Auftraggeber für die Werbeinformation entsprechende Werbekosten in Rechnung stellt.

## Patentansprüche

1. Verfahren zum Betreiben eines funkbasierten Kommunikationssystems, bei dem eine Werbeinformation von einer Basisstation (BS) an mindestens eine Mobilstation (MS) gesendet wird, **dadurch gekennzeichnet, dass** die Mobilstation (MS) prüft, ob von einem Benutzer der Mobilstation (MS) eine die Mobilstation (MS) betreffende Aktion durchgeführt wird, dass - sofern dies der Fall ist - die empfangene Werbeinformation auf der Mobilstation (MS) dem Benutzer zur Kenntnis gebracht wird, und dass die Mobilstation (MS) eine Bestätigung betreffend die Werbeinformation an die Basisstation (BS) zurücksendet.

2. Verfahren nach Anspruch 1, **dadurch gekennzeichnet, dass** es sich um eine otpische und/oder akustische Werbeinformation handelt.

3. Verfahren nach einem der Ansprüche 1 oder 2, **dadurch gekennzeichnet, dass** die Mobilstation (MS) prüft, ob von einem Benutzer der Mobilstation (MS) eine Aktion durchgeführt wird, bei der ein Anzeigefeld (AF) der Mobilstation (MS) von dem Benutzer betrachtet wird, dass - sofern dies der Fall ist - die empfangene Werbeinformation auf dem Anzeigefeld (AF) der Mobistation (MS) angezeigt wird, und dass die Mobilstation (MS) eine Bestätigung betreffend die Anzeige der Werbeinformation an die Basisstation (BS) zurücksendet.

4. Verfahren nach einem der Ansprüche 1 bis 3, **dadurch gekennzeichnet, dass** die Werbeinformation gleichzeitig an eine Mehrzahl von Mobilstationen (MS) gesendet wird.

5. Verfahren nach Anspruch 4, **dadurch gekennzeichnet, dass** die Werbeinformation über einen Kanal (BCH, DSCH, FACH) an die Mobilstationen (MS) gesendet wird, der allen Mobilstationen (MS) zugeordnet ist.

6. Verfahren nach einem der Ansprüche 1 bis 5, **dadurch gekennzeichnet, dass** die Bestätigung über einen Kanal (RACH, DCH, CPCH) an die Basisstation (BS) gesendet wird, der nur einer der Mobilstationen (MS) zugeordnet ist.

7. Verfahren nach einem der Ansprüche 1 bis 6, **dadurch gekennzeichnet, dass** die Bestätigung ein Mal pro Einblendung der Werbeinformation an die Basisstation (BS) gesendet wird.

8. Verfahren nach Anspruch 7, **dadurch gekennzeichnet, dass** die Bestätigung die Zeitdauer der Einblendung erhält.

9. Verfahren nach einem der Ansprüche 1 bis 6, **dadurch gekennzeichnet, dass** die Bestätigung in vorgegebenen Zeitabständen wiederholt an die Basisstation (BS) gesendet wird, solange von dem Benutzer der Mobilstation (MS) eine die Mobilstation (MS) betreffende Aktion durchgeführt wird.

10. Verfahren nach einem der Ansprüche 1 bis 9, **dadurch gekennzeichnet, dass** die Mobilstation (MS) in Abhängigkeit von der angezeigten Werbeinformation einen Hash-Code erzeugt und als Bestätigung an die Basisstation (BS) versendet.

11. Verfahren nach einem der Ansprüche 1 bis 10, **dadurch gekennzeichnet, dass** die Bestätigung von dem Kommunikationssystem erkannt und in Abhängigkeit davon eine Vergütung und/oder Verrechnung für die angezeigte Werbeinformation durchgeführt wird.

12. Mobilstation (MS) für ein funkbasiertes Kommunikationssystem, bei dem eine Werbeinformation von einer Basisstation (BS) an die Mobilstation (MS) gesendet werden kann, **dadurch gekennzeichnet, dass** die Mobilstation (MS) prüfen kann, ob von einem Benutzer der Mobilstation (MS) eine die Mobilstation (MS) betreffende Aktion durchgeführt wird, dass - sofern dies der Fall ist - die empfangene Werbeinformation auf der Mobilstation (MS) dem Benutzer zur Kenntnis gebracht werden kann, und dass die Mobilstation (MS) eine Bestätigung betreffend die Werbeinformation an die Basisstation (BS) zurücksenden kann.

13. Mobilstation (MS) nach Anspruch 12, **dadurch gekennzeichnet, dass** die Mobilstation (MS) prüfen kann, ob von einem Benutzer der Mobilstation (MS) eine Aktion durchgeführt wird, bei der ein Anzeigefeld (AF) der Mobilstation (MS) von dem Benutzer betrachtet wird, dass - sofern dies der Fall ist - die empfangene Werbeinformation auf dem Anzeigefeld (AF) der Mobilstation (MS) angezeigt werden kann, und dass die Mobilstation (MS) eine Bestätigung betreffend die Anzeige der Werbeinformation an die Basisstation (BS) zurücksenden kann.

14. Mobilstation (MS) nach Anspruch 12 oder 13, **dadurch gekennzeichnet, dass** Mittel vorgesehen sind, die geeignet sind, in Abhängigkeit von der angezeigten Werbeinformation einen Hash-Code zu erzeugen und als Bestätigungen an die Basisstation (BS) zu versenden.

15. Funkbasiertes Kommunikationssystem, bei dem eine Werbeinformation von einer Basisstation (BS) an mindestens eine Mobilstation (MS) gesendet werden kann, **dadurch gekennzeichnet, dass** die Mobilstation (MS) prüfen kann, ob von einem Benutzer der Mobilstation (MS) eine die Mobilstation (MS) betreffende Aktion durchgeführt wird, dass - sofern dies der Fall ist - die empfangene Werbeinformation auf der Mobilstation (MS) dem Benutzer zur Kenntnis gebracht werden kann, und dass die Mobilstation (MS) eine Bestätigung betreffend die Werbeinformation an die Basisstation (BS) zurücksenden kann.

16. Kommunikationssystem nach Anspruch 15, **dadurch gekennzeichnet, dass** die Mobilstation (MS) prüfen kann, ob von einem Benutzer der Mobilstation (MS) eine Aktion durchgeführt wird, bei der ein Anzeigefeld (AF) der Mobilstation (MS) von dem Bentuzer betrachtet wird, dass - sofern dies der Fall ist - die empfangene Werbeinformation auf dem Anzeigefeld (AF) der Mobilstation (MS) angezeigt werden kann, und dass die Mobilstation (MS) eine Bestätigung betreffend die Anzeige der Werbeinformation an die Basisstation (BS) zurücksenden kann.

17. Kommunikationssystem nach Anspruch 15 oder 16, **dadurch gekennzeichnet, dass** Mittel vorgesehen sind, die dazu geeignet sind, die Bestätigung zu erkennen und in Abhängigkeit davon eine Vergütung und/oder Verrechnung für die angezeigte Werbeinformation durchzuführen.
